# EUROPÄISCHE PATENTSCHRIFT

(11) **EP 0 518 126 B1**
(45) Veröffentlichungstag und Bekanntmachung des Hinweises auf die Patenterteilung: **14.02.1996**
(21) Anmeldenummer: 92108907.4
(22) Anmeldetag: 27.05.1992
(51) Int. Cl.: B61G 11/12

(54) **Feder mit Stossdämpfer für Eisenbahnwagen**
Spring with shock absorber for railway vehicle
Ressort avec amortisseur pour véhicule ferroviaire

(30) Priorität: 31.05.1991 DE 4117943
(43) Veröffentlichungstag der Anmeldung: 16.12.1992
(73) Patentinhaber: Bergische Stahl-Industrie, D-42859 Remscheid (DE)
(72) Erfinder: Niklaus, Josef, 90431 Nürnberg (DE)
(74) Vertreter: Dahlkamp, Heinrich-Leo

(56) Entgegenhaltungen:
- DE-A- 2 319 425
- DE-C- 505 677
- DE-C- 518 494

## Beschreibung

Die Erfindung bezieht sich auf einer Vorrichtung welche die Eigenschaften eines Stossdaempfers und einer Feder benutzen, und wird zum daempfen von Stoessen die beim Zusammenstossen der Wagen entstehen oder zum daempfen der Stoesse welche bei Unebenheiten auf den Eisenbahngleisen entstehen.
Auch in anderen Bereichen, bei denen man Stoesse zu daempfen hat, ist die Erfindung nutzbar.
Um Stoesse zu daempfen welche beim Zusammenstossen der Waggons entstehen, benutzt man Puffer, die in ihrem Bau Ringfedern oder Gummifedern anwenden, welche bei grossen Kraeften den Nachteil haben, einen kleinen Teil Energie zu speichern. Es werden auch hydraulische und Hydro-Gasdaempfer verwendet z.B DE-A-2319425, welche den Nachteil haben, dass sie teurer sind und einen komplizierten Bau aufweisen.
Sie sind nicht fuer Stoesse, welche bei hoher Geschwindigkeit entstehen geeignet und erfordern hohe Instandhaltungskosten. Beim benutzen von Automatikkupplungen, koennen Stossdaempfer von oben genannten Bauten oder Daempfer mit Keil und Feder verwendet werden. Alle haben den Nachteil, dass der Einbau zwischen Eisenbahnwagen kompliziert ist. Das Ziel der Erfindung ist: Einfache Konstruktion, niedriger Baupreis und ein hoher Wirkungsgrad.
Das technische Problem welches die Erfindung loest, ist der Bau einer Vorrichtung bei der die Funktion von Feder mit der Funktion des Daempfers verbunden wird. Dies geschieht in einer einfachen Konstruktion und einer leichten Eingliederung (Integration) in den Bau der Eisenbahnwagen, noch verwendbar bei den Zug- und Stossforrichtungen.
Der Puffer beseitigt die Nachteile dadurch, dass er aus einem elastischen Paket aus Gummiringscheiben abwechselnd mit Stahlringscheiben montiert ist, so dass er einen luftdichten Raum bildet, welcher mit Hydraulikflüssigkeit bzw. Oel gefuellt wird. Die Verbindung zwischen den luftdichten Raum und den Expansionsraum wird durch ein kalibriertes Loch hergestellt, welches an einer der Endscheiben am Ende des Pakets vorhanden ist. Das Paket kann aus ein oder zwei Saeulen bestehen, gebaut aus Gummiringscheiben und Stahlringscheiben abwechselnd (Alternativ) montiert.
Der luftdichte Raum fuer das Oel, bildet sich in diesem Fall zwischen den zwei Saeulen.
Der Expansionsraum im ersten Fall, besteht aus einem zylinderfoermigen Werkstueck. Im zweiten Fall, aus dem Raum, welcher sich zwischen zwei konzentrischen Zylindern bildet. Diese sind an beiden Enden mit zwei Scheiben verdichtet.
Die statische Eigenschaft dieses Daempfers ist bestimmt vom elastischen Paket. Die dynamische Eigenschaft zeigt ein Wachsen der gespeicherten und verbrauchten Energie auf Grund der Zusammenhaenge der Deformationskraft und der Deformationsgeschwindigkeit.
Diese Zusammenhaenge werden verursacht durch den Oelfluss, durch das kalibrierte Loch in den Expansionsraum und die Verkleinerung des luftdichten Oelraums. Die Verkleinerung des Oelraums wird durch die Verkuerzung des elastischen Pakets bei einwirken der Kraft, sowie durch die Radialdeformation der Gummiringscheiben verursacht.

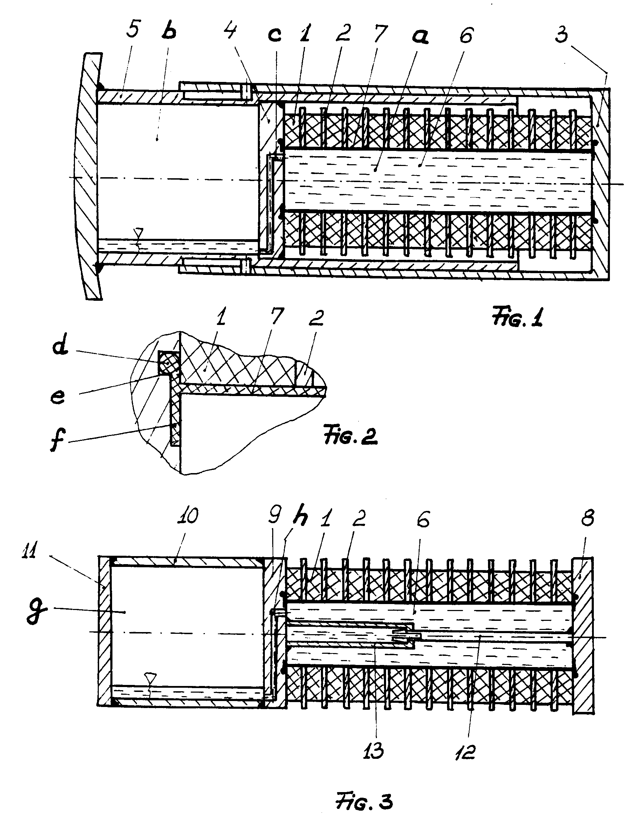

Figur 1: Laengsschnitt durch einen Puffer ausgeruestet mit einem Stossdaempfer aus der die Erfindung hervorgeht. Eine der beiden Endscheiben ist das Gehaeuse.
Figur 2: Detail ueber die Verdichtung des luftdichten Oelraums.
Figur 3: Laengsschnitt durch die Daempffeder des Puffers in welchen Fall dieser keine gemeinsamen Teile mit dem Puffergehaeuse hat.

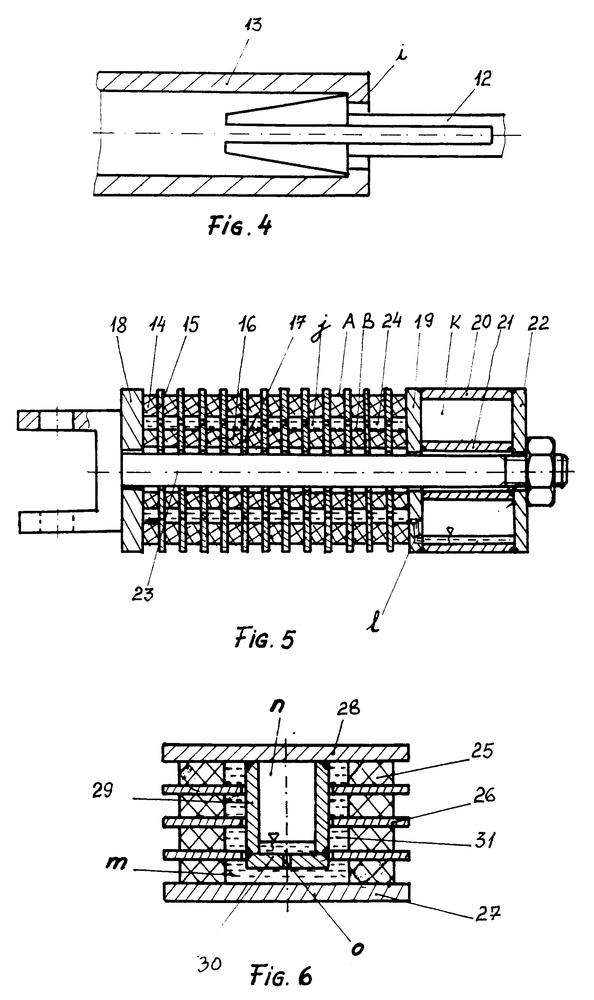

Figur 4: Detail mit der Vorkomprimiervorrichtung.
Figur 5: Rohrfoermige Daempferfeder bestimmt fuer selbstaendige Kupplung (Automatikkupplung).
Figur 6: Daempferfeder bestimmt fuer die gelenkige Aufhaengung.

zu 1: Der Daempfer nach der Erfindung besteht aus einer Kombination von Gummiringscheiben (1) und Stahlringscheiben (2), so das ein luftdichter Raum (a) entsteht. Verdichtet an einem Ende durch die Befestigungsplatte (3) des Puffergehaeuse und am anderen Ende durch eine Scheibe (4) welche mit den mobilen Teil (5) des Gehaeuses einen Expansionsraum (b) bildet. Der Ueberfluss des Oels (6) welcher Vorher den Raum (a) besetzt, fliesst waehrend des zusammendrueckens des Puffers durch ein kalibriertes Loch (c), in den Expansionsraum (b). Die Verdichtung zwischen den Teilen des elastischen Pakets geschieht durch das Kleben der Gummiringe (1) und Stahlringe (2) miteinander.
zu 2: Oder durch die Benutzung eines Gummistrumpfs (7), welcher eine spetielle Konstruktion an beiden Enden aufweist, die aus einem Tor (d) besteht.
zu 3: Hat der Stossdaempfer keine gemeinsamen Teile mit dem Puffergehaeuse, ist der luftdichte Oelraum (a) an einem der beiden Enden mit einer Scheibe (8) verdichtet und am anderen Ende mit einer Scheibe (9), welche mit einem zylindrischen Werkstueck (10) und Endscheibe (11) die Expansionskammer (g) bildet.
   Das Oel (6) besetzt den ganzen Raum (a) und fliesst waehrend des zusammendrueckens des elastischen Pakets in die Expansionskammer (g) durch ein kalibriertes Loch (h), gebohrt an der Scheibe (g) im Falle das die Stahl- und Gummiringe (1) und (2) nicht aneinander geklebt werden, wird das elastische Paket vorkomprimiert, mit Hilfe einer Stange versehen mit einen Haken (12), befestigt mit dem Ende ohne Haken an der Scheibe (8).
zu 4: Der Haken wird an einen Innenbund (i), welcher sich an einem Rohr (13) befindet, mit dem zweiten Ende an der Scheibe (8) befestigt.
zu 5: Im Falle der Benutzung des Stossdaempfers bei der automatischen Kupplung setzt sich das elastische Paket aus zwei konzentrischen Saeulen zusammen.
   Saeule (A) zusammengesetzt aus Gummiringscheiben (14) abwechselnd montiert mit Stahlringscheiben (15) und der Saeule (B) zusammengesetzt. Aus den Gummiringscheiben (16) abwechselnd montiert mit Stahlringscheiben (17), so das sie unter ihnen einen Raum (j) bilden. Abgeschlossen an den Enden mit je einer Scheibe (18) und (19). Die Scheibe (19) ist gemeinsam mit dem Expansionsraum (K) zusammengesetzt, aus zwei konzentrischen Zylindern (20) und (21), und einer Endscheibe (22). Bei diesem Stossdaempfer wird die Traktionskraft mit einer Traktionsstange (23) uebertragen die durch das Innere des Stossdaempfers fuehrt.
   Die Endscheibe (18) stuetzt sich auf den Gegenhalter, eingebaut in den Laengstraeger der Kupplung. Die Stosskraft uebertraegt sich durch den Stangenkopf (23) welcher die Endscheibe (18) schiebt und uebertraegt die Kraft des Eisenbahnwagens durch die Scheibe (22) und Gegenhalter eingebaut in den Laengstraeger der Kupplung.
   Das Oel (24) welches den ganzen Raum (j) besetzt, kann in die Expansionskammer (K), durch ein kalibriertes Loch (l) fliessen welches sich in der Scheibe (19) befindet.
zu 6: Im Fall der Benutztung des Stossdaempfers mit einer moeglichst kleiner Hoehe der Vorrichtung, setzt sich dieser zusammen aus einem Paket mit Gummiringscheiben (25), abwechselnd montiert mit Stahlringscheien (26) und verdichtet an beiden Enden mit je einer Scheibe (27) und (28). Der so zusammengesetzte luftdichte Oelraum (m) hat in seinem Inneren einen anderen Raum (n) zusammengesetzt aus einem Rohr (29), befestigt an der Scheibe (28) und einer Endscheibe (30), welche ein kalibriertes loch (o) aufweist. Beim zusammendruecken des Pakets fliesst das Oel (31), welches den ganzen Raum (m) besetzt, durch das kalibrierte Loch (o) in die Expansionskammer (n).

## Patentansprüche

1. Feder mit Stoßdämpfer für Eisenbahnwagen zusammengesetzt aus einer Kombination von Gummiringscheiben (1) und Stahlringscheiben (2), so das sie einen luftdichten Raum (a) bilden, der vollständig mit Hydraulikflüssigkeit gefüllt ist, abgedichtet an beiden Enden durch Stahlscheiben, dadurch gekennzeichnet, daß eine Scheibe (4, 9) die Trennscheibe zu einem Expansionsraum (b, g) bildet, wobei beim Zusammendrücken des Dämpfers Hydraulikflüssigkeit durch ein einziges kalibriertes Loch (c, h) von der Kammer (a) in die Kammer (b, g) fließt.

2. Feder mit Stoßdämpfer nach den 1. Anspruch im Falle der Anwendung bei Puffern, dadurch ge kennzeichnet, daß die Endscheibe (4) mit dem mobilen Teil (5) des Gehäuses einen Expansionsraum bildet, wobei die Flüssigkeit (6) welche den ganzen Raum (a) füllt beim zusammendrücken des Puffers von Raum (a) durch ein kalibriertes Loch (c) in den Expansionsraum (b) fließt.

3. Feder mit Stoßdämpfer nach Anspruch 1 und 2, dadurch gekennzeichnet, daß eine Abdichtung des luftdichten Raumes (a) durch einen Gummistrumpf (7), der an beiden Enden mit jeweils einem Ring (d) versehen und in kreisförmigen Nuten (e) der Scheiben (3, 4) des luftdichten Raumes (a) befestigt ist, mit einem Bund (f) an den Scheiben (3, 4) erfolgt, wobei der Bund (f) während des steigenden Drucks im Innenraum (a) an den Scheiben (3, 4) gedrückt wird und somit eine Verdichtung gesichert ist.

4. Feder mit Stoßdämpfer nach Anspruch 1, 2 und 3, dadurch gekennzeichnet, daß wenn die Gummiringscheiben (1) und Stahlringscheiben (2) nicht miteinander verklebt werden oder nicht direkt im Gehäuse montiert sind, dann wird eine Abdichtung des luftdichten Raumes (a) durch eine Vorspannung erreicht, wobei die Vorspannung mit einem ineinander steckbaren Gestänge erfolgt, ein Haken (12) der an einer Scheibe (8) befestigt ist, hinter den endseitigen Innenbund (i) eines Rohres (13), daß an der anderen Scheibe (9) befestigt ist, greift.

5. Feder mit Stoßdämpfer nach Anspruch 1 und 3, dadurch gekennzeichnet, daß das elastische Paket aus zwei konzentrischen Säulen (A) und (B) besteht, die einen Zwischenraum (j) bilden, verdichtet an beiden Enden mit den Ringscheiben (18) und (19), wobei die Expansionskammer (k) gemeinsam mit der Ringscheibe (19), den konzentrischen Zylindern (20), (21) und der Endscheibe (22) gebildet wird.

6. Feder mit Stoßdämpfer nach Anspruch 1, 3 und 5, dadurch gekennzeichnet, daß die Zugkraft über eine Zugstange (23) übertragen wird, welche durch den Innenraum des Dämpfers führt, wobei sich die Endscheibe (18) auf die Gegenhalter für die Zugkraft stützt, eingebaut in den Längsträger der Kupplung, die Stoßkraft wird durch den Stangenkopf der Zugstange übertragen, der die Scheibe (18) drückt, so überträgt sich die Stoßkraft auf den Eisenbahnwagen, durch die Scheibe (22) und den Gegenhaltern, eingebaut in den Längsträger der Kupplung.

7. Feder mit Stoßdämpfer nach Anspruch 1 und 3, dadurch gekennzeichnet, daß der Expansionsraum (n) aus einem Rohr (29) besteht, befestigt an der Endscheibe (28) und verschlossen mit einer Scheibe (30), versehen mit einem Loch (o), um den Durchfluß der Flüssigkeit (31) von Raum (m) in den Raum (n), beim Zusammendrücken zu ermöglichen.

## Claims

1. Spring with shock absorber for railway coaches, composed of a combination of rubber ring plates (1) and steel ring plates (2) such that they form an airtight space (a) which is completely filled with hydraulic fluid, sealed at both ends by steel plates, characterized in that a plate (4, 9) forms the partition plate to an expansion space (b, g), hydraulic fluid flowing through a single calibrated hole (c, h) from the chamber (a) into the chamber (b, g) whenever the shock absorber is compressed.

2. Spring with shock absorber according to Claim 1 for use in buffers, characterized in that the end plate (4) forms with the mobile part (5) of the housing an expansion space, the fluid (6) which fills the entire space (a), whenever the buffer is compressed, flowing from the space (a) through a calibrated hole (c) into the expansion space (b).

3. Spring with shock absorber according to Claims 1 and 2, characterized in that the airtight space (a) is sealed by a rubber stocking (7), which is provided at both ends with a respective ring (d) and is fastened in circular grooves (e) in the plates (3, 4) of the airtight space (a), by means of a collar (f) against the plates (3, 4), the collar (f), as the pressure rises in the interior (a), being forced against the plates (3, 4) and a condensation thus being secured.

4. Spring with shock absorber according to Claims 1, 2 and 3, characterized in that, where the rubber ring plates (1) and steel ring plates (2) are not stuck together or are not mounted directly in the housing, then a sealing of the airtight space (a) is achieved by pretensioning, the pretensioning being effected with use of a telescopic linkage, a hook (12), which is fastened to a plate (8), gripping behind the end-side inner collar (i) of a tube (13) which is fastened to the other plate (9).

5. Spring with shock absorber according to Claims 1 and 3, characterized in that the elastic package comprises two concentric columns (A) and (B), which form an interspace (j), condensed at both ends by the ring plates (18) and (19), the expansion chamber (k) being formed jointly with the ring plate (19), the concentric cylinders (20), (21) and the end plate (22).

6. Spring with shock absorber according to Claims 1, 3 and 5, characterized in that the tensile force is transmitted via a drawbar (23) running through the interior of the shock absorber, the end plate (18) being supported upon the dolly for the tensile force, installed in the longitudinal member of the coupling, the impact force being transmitted by the bar head of the drawbar, which bar head presses the plate (18), the impact force thus being transmitted to the railway coach through the plate (22) and the dolly installed in the longitudinal member of the coupling.

7. Spring with shock absorber according to Claims 1 and 3, characterized in that the expansion space (n) comprises a tube (29), which is fastened to the end plate (28) and is closed off by a plate (30) provided with a hole (o) to allow the fluid (31) to pass from the space (m) into the space (n) in the event of compression.

## Revendications

1. Ressort à amortisseur pour wagons de chemin de fer composé d'une combinaison de disques annulaires en caoutchouc (1) et de disques annulaires en acier (2) qui forment ainsi une chambre étanche à l'air (a) qui est entièrement remplie de fluide hydraulique et obturée aux deux extrémités par des disques en acier, caractérisé par le fait qu'un disque (4, 9) forme une cloison vis-à-vis d'une chambre d'expansion (b, g) et, lors de la compression de l'amortisseur, du fluide hydraulique va de la chambre (a) dans la chambre (b, g) en passant par un trou calibré unique (c, h).

2. Ressort à amortisseur selon la revendication 1 utilisé pour des tampons, caractérisé par le fait que le disque d'extrémité (4) forme une chambre d'expansion avec la partie mobile (5) du corps et, lors de la compression du tampon, le liquide (6), qui remplit toute la chambre (a), va de celle-ci dans la chambre d'expansion (b) en passant par un trou calibré (c).

3. Ressort à amortisseur selon les revendications 1 et 2, caractérisé par le fait que la chambre étanche à l'air (a) est rendue étanche par un bas caoutchouc (7), qui est pourvu à chaque extrémité d'un anneau (d) et fixé dans des gorges circulaires (e) des disques (3, 4) de la chambre étanche à l'air (a), par un collet (f) appliqué contre les disques (3, 4), ce collet (f) étant, pendant la croissance de la pression dans la chambre intérieure (a), serré contre les disques (3, 4) et l'étanchéité étant ainsi réalisée.

4. Ressort à amortisseur selon les revendications 1, 2 et 3, caractérisé par le fait que, lorsque les disques annulaires en caoutchouc (1) et les disques annulaires en acier (2) ne sont pas collés les uns aux autres ou' ne sont pas montés directement dans le corps, l'étanchéité de l'espace étanche à l'air (a) est réalisée par une précontrainte faite avec des tiges emboîtables, un crochet (12) fixé à un disque (8) s'appliquant derrière le collet intérieur côté extrémité (i) d'un tube (13) qui est fixé à l'autre disque (9).

5. Ressort à amortisseur selon les revendications 1 et 3, caractérisé par le fait que le paquet élastique est constitué de deux colonnes coaxiales (A et B) qui forment un intervalle (j) obturé aux deux extrémités par les disques annulaires (18 et 19), la chambre d'expansion (k) étant formée par le disque annulaire (19), les cylindres coaxiaux (20, 21) et le disque d'extrémité (22).

6. Ressort à amortisseur selon les revendications 1, 3 et 5, caractérisé par le fait que la force de traction est transmise par un tirant (23) qui traverse l'amortisseur, le disque d'extrémité (18) s'appuie sur les butées pour la force de traction montées dans le longeron de l'attelage, la force de choc est transmise par la tête du tirant, laquelle pousse le disque (18), de sorte que cette force se transmet au wagon par le disque (22) et les butées montées dans le longeron de l'attelage.

7. Ressort à amortisseur selon les revendications 1 et 3, caractérisé par le fait que la chambre d'expansion (n) est constituée d'un tube (29) fixé au disque d'extrémité (28) et fermé par un disque (30) pourvu d'un trou (o) pour permettre, lors de la compression, le passage du liquide (31) de la chambre (m) à la chambre (n).
